(19) **Europäisches Patentamt / European Patent Office / Office européen des brevets**

(11) **EP 4 738 819 A1**

(12) **EUROPEAN PATENT APPLICATION**
published in accordance with Art. 153(4) EPC

(43) Date of publication:
06.05.2026 Bulletin 2026/19

(21) Application number: 24916564.8

(22) Date of filing: 14.11.2024

(51) International Patent Classification (IPC):
*H04N 19/117* (2014.01)

(52) Cooperative Patent Classification (CPC):
H04N 19/117; H04N 19/147; H04N 19/186;
H04N 19/19; H04N 19/82

(86) International application number:
PCT/CN2024/131993

(87) International publication number:
WO 2025/148514 (17.07.2025 Gazette 2025/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.01.2024 CN 202410047381

(71) Applicant: ZTE Corporation
Shenzhen, Guangdong 518057 (CN)

(72) Inventors:
• XIE, Shaowei
Shenzhen, Guangdong 518057 (CN)

• BAI, Yaxian
Shenzhen, Guangdong 518057 (CN)
• GAO, Ying
Shenzhen, Guangdong 518057 (CN)
• JIA, Menghu
Shenzhen, Guangdong 518057 (CN)
• WU, Ping
Shenzhen, Guangdong 518057 (CN)
• HUANG, Cheng
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **MANAGEMENT METHOD AND APPARATUS FOR ADAPTATION PARAMETER SET, AND ELECTRONIC DEVICE AND STORAGE MEDIUM**

(57) Provided in the present disclosure are a management method and apparatus for an adaptation parameter set (APS), and an electronic device and a storage medium. The management method for an APS comprises: acquiring a target video category and/or a target video feature corresponding to a target video block; determining a correction factor for each decision factor on the basis of the target video category and/or the target video feature; correcting each decision factor on the basis of the correction factor for each decision factor, so as to obtain a plurality of corrected decision factors, wherein the probability of a corrected decision factor instructing the implementation of filtering is greater than the probability of a pre-correction decision factor instructing the implementation of filtering, and the probability of a corrected decision factor instructing the usage of a new APS during filtering is greater than the probability of a pre-correction decision factor instructing the usage of the new APS during filtering; and storing at least one obtained new APS in a historical candidate set on the basis of each corrected decision factor.

FIG. 8

## Description

The present disclosure claims priority to Chinese Patent Application No. 202410047381.2, filed on January 11, 2024, which is hereby incorporated by reference in its entirety.

## TECHNICAL FIELD

The present disclosure relates to the technical field of video encoding, and in particular, to a management method and apparatus for adaptation parameter set, an electronic device, and a storage medium.

## BACKGROUND

In the adaptive loop filter (ALF) technology, there are four types of filtering modes: a chroma (i.e., chrominance) ALF, a luma (i.e., luminance) ALF, cross-component ALF (CCALF) Cb (i.e., a difference between a blue component and the luma), and CCALF Cr (i.e., a difference between a red component and the luma), and each filtering mode corresponds to an adaptation parameter set (APS) including filtering parameters.

At present, upon performing ALF processing on a video, for each filtering mode, a corresponding decision factor is determined based on a current video block in the video, and a plurality of new APSs used for the current video block during ALF processing are determined based on a plurality of decision factors. Then, a plurality of historical APSs used for a historical video block are replaced with the plurality of new APSs used for the current video block in an ALF APS historical candidate set, thus providing the filtering reference for subsequent video blocks in the video.

## SUMMARY

In an aspect, a management method for adaptation parameter set is provided. The management method for adaptation parameter set includes: a management apparatus for adaptation parameter set (hereinafter referred to as "management apparatus" for short) acquires a target video class and/or a target video feature corresponding to a target video block. The management apparatus determines correction factors for respective decision factors according to the target video class and/or the target video feature, where a decision factor corresponds to a preset filtering mode, a decision factor is used to indicate whether to perform filtering on a video block, and to indicate to use any APS of a new APS, a historical APS from a historical candidate set, or a preset APS during filtering. The management apparatus corrects the respective decision factors according to the correction factors for the respective decision factors to obtain a plurality of corrected decision factors, where a probability that a corrected decision factor indicates to perform filtering is higher than a probability that a corresponding decision factor before correction indicates to perform filtering, and a probability that a corrected decision factor indicates to use a new APS during filtering is higher than a probability that a corresponding decision factor before correction indicates to use a new APS during filtering. The management apparatus stores at least one obtained new APS to the historical candidate set according to respective corrected decision factors.

In another aspect, a management apparatus for adaptation parameter set is provided. The management apparatus for adaptation parameter set includes an acquisition module, a processing module, and a storage module.

The acquisition module is configured to acquire a target video class and/or a target video feature corresponding to a target video block. The processing module is configured to determine correction factors for respective decision factors according to the target video class and/or the target video feature, where a decision factor corresponds to a preset filtering mode, a decision factor is used to indicate whether to perform filtering on a video block, and a probability of using any APS of a new APS, a historical APS from a historical candidate set, or a preset APS during filtering. The processing module is further configured to correct the respective decision factors according to the correction factors for the respective decision factors to obtain a plurality of corrected decision factors, where a probability that a corrected decision factor indicates to perform filtering is higher than a probability that a corresponding decision factor before correction indicates to perform filtering, and a probability that a corrected decision factor indicates to use a new APS during filtering is higher than a probability that a corresponding decision factor before correction indicates to use a new APS during filtering. The storage module is configured to store at least one obtained new APS to the historical candidate set according to respective corrected decision factors.

In yet another aspect, an electronic device is provided. The electronic device includes: a memory and a processor, where the memory and the processor are coupled; the memory is configured to store computer programs; and the processor, upon executing the computer programs, implements the management method for adaptation parameter set provided in the above-mentioned aspect.

In yet another aspect, a computer-readable storage medium is provided. The computer-readable storage medium stores computer program instructions, where the computer program instructions, upon being executed by a processor, enable the processor to implement the management method for adaptation parameter set provided in the above-mentioned aspect.

In yet another aspect, a computer program product is provided. The computer program product includes computer program instructions, where the computer program instructions, upon being executed by a processor, enable the processor to implement the management method for adaptation parameter set provided in the above-mentioned aspects.

BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.

FIG. 1 is a schematic diagram of a structure of a video encoder according to some embodiments of the present disclosure.

FIG. 2 is a schematic diagram of a structure of a video decoder according to some embodiments of the present disclosure.

FIG. 3 is a flowchart of an in-loop filtering in the H.266/VVC standard according to some embodiments of the present disclosure.

FIG. 4 is a schematic diagram of an instance of an internal implementation form of an ALF APS according to some embodiments of the present disclosure.

FIG. 5 is a schematic diagram of an instance of an ALF decision candidate item according to some embodiments of the present disclosure.

FIG. 6 is a schematic diagram of an instance of managing an APS according to some embodiments of the present disclosure.

FIG. 7 is a schematic diagram of a communication system according to some embodiments of the present disclosure.

FIG. 8 is a flowchart of a management method for adaptation parameter set according to some embodiments of the present disclosure.

FIG. 9 is a schematic diagram of an instance of an ALF APS according to some embodiments of the present disclosure.

FIG. 10 is a schematic diagram of another instance of an ALF APS according to some embodiments of the present disclosure.

FIG. 11 is a schematic diagram of an instance of an ALF APS historical candidate set according to some embodiments of the present disclosure.

FIG. 12A and FIG. 12B are schematic diagrams of another instance of managing an APS according to some embodiments of the present disclosure.

FIG. 13A and FIG. 13B are schematic diagrams of yet another instance of managing an APS according to some embodiments of the present disclosure.

FIG. 14 is a structural schematic diagram of a management apparatus for adaptation parameter set according to the embodiments of the present disclosure.

FIG. 15 is a structural schematic diagram of a management device for adaptation parameter set according to the embodiments of the present disclosure.

DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplarily" or "for example" and variations thereof are used to indicate examples, instances, or illustrations. Any embodiment or design solution described in the present disclosure with wordings such as "exemplarily" or "for example" should not be illustrated as being more preferred or advantageous over other embodiments or design solutions in the present disclosure. Specifically, the usage of the wordings such as "exemplarily" or "for example" is intended to present related concepts in a concrete way.

Expressions such as "first" and "second" are used for descriptive purposes only, and are not to be understood as indicating or implying a relative importance or implicitly indicating a number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

Before providing a detailed introduction to the management method of the adaptive parameter set provided in this disclosed embodiment, the implementation environment and application scenarios of this disclosed embodiment will be introduced first.

Firstly, an introduction will be given to the application scenarios of the embodiments of the present disclosure.

Improving the efficiency of video encoding and compression has always been an effective way to enhance the quality of video services, and the video encoding and decoding technology has been constantly iterating and evolving over the past 30 years of development. The H.266/Versatile Video Coding (VVC) standard that has been released has encoding efficiency that represents the highest level in the art. The ALF technology is a filtering technique newly added to the H.266/VVC standard. In the ALF technology, an ALF APS is used to transmit ALF filtering coefficients. The ALF APS may include filtering coefficients corresponding to four filtering modes: luma ALF APS, chroma ALF APS, CCALF Cb APS, and CCALF Cr APS. In the current ALF technology, for a slice, decision processes of whether to use a new APS in the four filtering modes of the luma ALF, the chroma ALF, the CCALF Cb, and the CCALF Cr are relatively independent, and decision factors corresponding to respective filtering modes are used for judgment. A new generation video coding standard H.266/VVC coding framework developed by the International Telecommunication Union-Telecommunication Standardization Sector (ITU-T) and the International Organization for Standardization (ISO)/International Electrotechnical Commission (IEC) joint video project includes modules such as intra frame prediction, inter frame prediction, transformation, quantization, in-loop filtering, and entropy coding, etc.

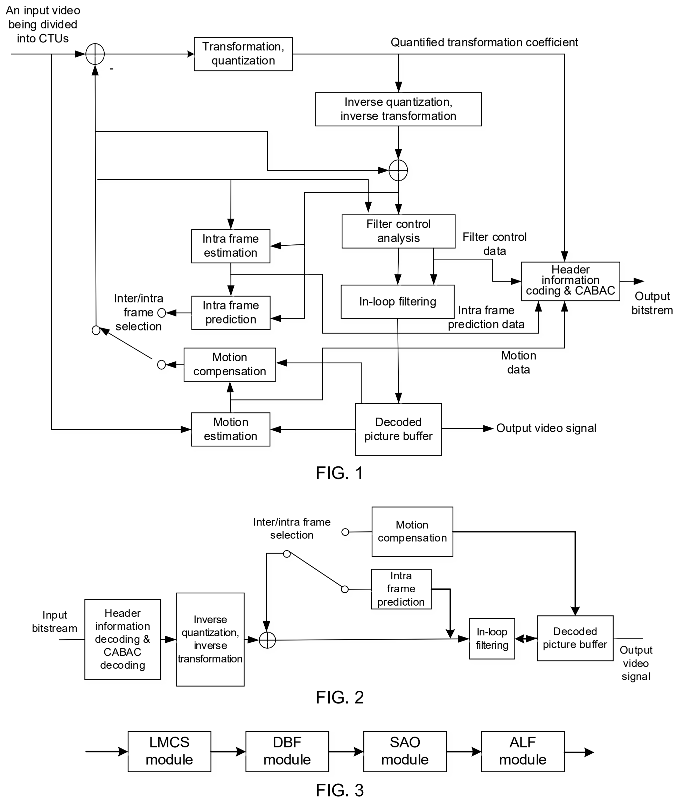

FIG. 1 is a block diagram of a structure of a video encoder provided in one embodiment. As shown in FIG. 1, an overall framework flowchart of an encoding end is as follows. During encoding, an input video is divided into video blocks for subsequent processing. Herein, video blocks being coding tree units (CTU) is taken as an example for description. It should be understood that an implementation process is similar in a case where the video blocks are in other types.

    (1) The input video is first divided into frames for CTU division.

    (2) Divided CTUs are sent to an intra/inter frame prediction module for prediction encoding. The intra frame prediction module is mainly configured to remove spatial correlation between pictures, a current sample block is predicted through encoded reconstructed CTU information, so as to remove spatial redundant information; the inter frame prediction module is mainly configured to remove temporal correlation between pictures, and an encoded picture is taken as a reference picture for the current frame to acquire motion information of various CTUs, so as to remove temporal redundancy.

    (3) An obtained intra/inter frame prediction value is subtracted from an original CTU to obtain a residual value, and then transformation and quantization are performed on the residual value to remove frequency domain correlation, and lossy compression is performed on the data. A picture is transformed from a spatial signal to frequency domain through transform encoding, thus concentrating energy in the low-frequency region. The quantization module may reduce a dynamic range of picture encoding.

    (4) Then entropy coding is performed on all encoding parameters and residual values to form a binary stream for storage or transmission. Output data of the entropy coding module is a compressed stream from an original video. In FIG. 1, entropy coding being a context-based adaptive binary arithmetic coding (CABAC) and header information coding is taken as example for illustration.

    (5) The intra/inter frame prediction value and the residual value obtained after inverse quantization and inverse transformation are added to obtain a block reconstruction value, and finally a reconstructed picture is formed.

    (6) The reconstructed picture is filtered by a loop filter and stored in a picture buffer as a reference picture for future reference.

The H. 266/VVC adopts a mixed coding framework based on CTU, and distortion effects such as block effect, ringing effect, color deviation, and picture blur still exist in compressed videos adopting the H.266/VVC standard. In order to reduce the impact of such distortion on video quality, the H.266/VVC adopts in loop filtering technology. The in-loop filtering technology in the H.266/VVC includes luma mapping with chroma scaling (LMCS), deblocking filter (DBF), sample adaptive offset (SAO), and ALF. In the LMCS, compression efficiency is improved by reallocating codewords within a dynamic range of information; the DBF is used to reduce the block effect; the SAO is used to improve ringing effect; and the ALF may reduce decoding errors.

FIG. 2 is a block diagram of a structure of a video decoder provided in one embodiment. As shown in FIG. 2, the framework flowchart of a video decoding end is as follows.

(1) A bitstream is analyzed to acquire a prediction mode and obtain an intra/inter frame prediction value.

(2) Inverse transformation and inverse quantization are performed on a residual value obtained from analyzing the bitstream.

During the analyzing process, header information decoding and CABAC decoding are required.

(3) The intra/inter frame prediction value and the residual value obtained after inverse quantization and inverse transformation are added to obtain a CTU reconstruction value, and finally a reconstructed picture is formed.

(4) The reconstructed picture is filtered by a loop filter and stored in a picture buffer as a reference picture for future reference.

FIG. 3 is a flowchart of the in-loop filtering in the H.266/VVC standard. As shown in FIG. 3, whether at the encoding end or decoding end, a connection order for various filtering modules in the in-loop filtering technology is a LMCS module, a DBF module, an SAO module, and an ALF module, that is, a filtering order is LMCS, DBF, SAO, and ALF.

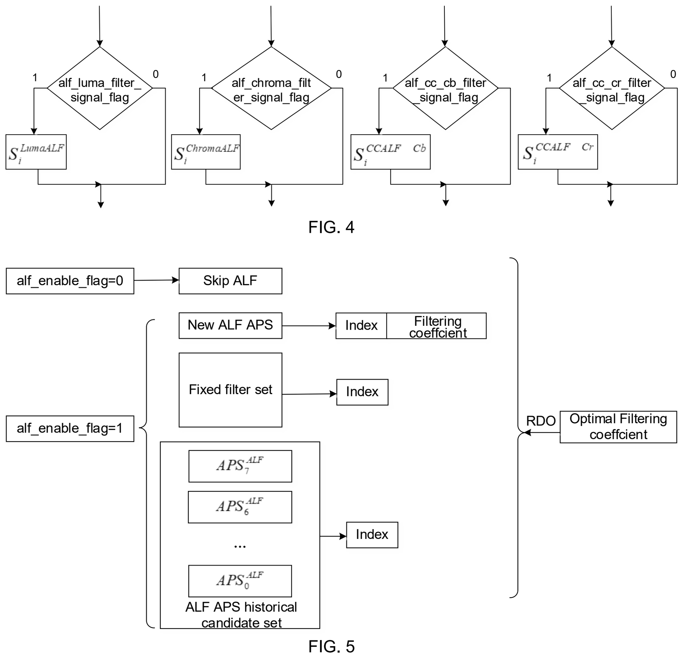

FIG. 4 is a schematic diagram of an instance of an internal implementation form of an ALF APS. The ALF APS is used to transmit ALF filtering coefficients (also referred to as ALF filtering parameters). In the present disclosure, the ALF filtering coefficients and ALF filtering parameters refer to the same items. The ALF APS may include filtering coefficients corresponding to four filtering modes: luma ALF APS, chroma ALF APS, CCALF Cb APS, and CCALF Cr APS. The ALF APS may include four modules internally, namely: luma ALF, chroma ALF, CCALF Cb, and CCALF Cr. Whether new APSs for various modules are used independently from each other may be determined since respective modules have corresponding identifiers to indicate whether to use the new APSs.

alf_luma_filter_signal_flag: it indicates whether there is a filtering parameter related to the luma ALF within the current ALF APS. If a value of this identifier is equal to a first preset value, it indicates that there is a filtering parameter related to the luma ALF within the current ALF APS, and if it is equal to a second preset value, it indicates that there is no filtering parameter related to the luma ALF within the current ALF APS.

For example, the first preset value may be 1, and the second preset value may be 0.

alf_chroma_filter_signal_flag: it indicates whether there is a filtering parameter related to the chroma ALF within the current ALF APS. If a value of this identifier is equal to a first preset value, it indicates that there is a filtering parameter related to the chroma ALF within the current ALF APS, and if it is equal to a second preset value, it indicates that there is no filtering parameter related to the chroma ALF within the current ALF APS.

alf_cc_cb_filter_signal_flag: it indicates whether there is a filtering parameter related to the CCALF Cb mode within the current ALF APS. If a value of this identifier is equal to a first preset value, it indicates that there is a filtering parameter related to the CCALF Cb mode within the current ALF APS, and if it is equal to a second preset value, it indicates that there is no filtering parameter related to the CCALF Cb mode within the current ALF APS.

alf_cc_cr_filter_signal_flag: it indicates whether there is a filtering parameter related to the CCALF Cr mode within the current ALF APS. If a value of this identifier is equal to a first preset value, it indicates that there is a filtering parameter related to the CCALF Cr mode within the current ALF APS, and if it is equal to a second preset value, it indicates that there is no filtering parameter related to the CCALF Cr mode within the current ALF APS.

It should be noted that whether there are filtering parameters related to various filtering modes within the current ALF APS refers to whether there are new APSs related to the various filtering modes within the current ALF APS, i.e., whether a new APS related to a filtering mode is used. The new APSs related to the various filtering modes are ALF filtering coefficients obtained based on an original frame and a reconstructed frame by solving a formula of the Wiener Hough formula related to the original frame and the reconstructed frame using the idea of Wiener filter with taking a minimum mean square error (MSE) between the original frame and the reconstructed frame as an optimization purpose.

Whether the new APSs corresponding to the respective filtering modes within ALF APS are used are independent from each other, which needs to be determined by the rate distortion criterion upon making decisions for the respective filtering modes in the ALF. If all four identifiers are decided to be the second preset value, then the new APSs of the ALF may not be used for the current video block. But once there is an identifier being the first preset value, a new APS of the ALF of the current video block may be used. Using the new APS of the ALF of the current video block in this embodiment refers to performing filtering based on the new APS of the ALF to implement picture reconstruction. Furthermore, the new APS of ALF may also be transmitted in the bitstream. In short, for an ALF APS transmitted to the bitstream, there is at least one filtering coefficient of a filtering mode within the ALF APS, and the filtering coefficient may be any one of these four filtering coefficients: $S_i^{LumaALF}$, $S_i^{ChromaALF}$, $S_i^{CCALF\ Cb}$ and $S_i^{CCALF\ Cr}$, and there may be up to four filtering coefficients, that is, there are all four filtering coefficients mentioned above within the ALF APS.

During the ALF operation process, an ALF APS historical candidate set is also maintained, and the ALF APS plays a major role in acquisition of a historical APS. In a case where a new APS is determined to be used, the ALF APS historical candidate set may also be updated according to a first-in first-out rule. The acquisition of the historical APS in the ALF relies on the ALF APS historical candidate set, and a number of historical sets for the current video block may be calculated through the historical candidate set. In a case of acquiring the historical candidate set, it is necessary to determine whether the APS in the historical candidate set is capable of being used for the current video block. Judgment conditions are:

(1) A time layer for transmitting the APS is lower than or equal to a time layer of the current video block.
(2) There is a filter set corresponding to the ALF mode in the APS.

Only APS that meets the above two conditions may be selected as a historical APS of the current video block.
In addition to the rule limitations for acquiring a historical APS, there may also be corresponding differences in the historical candidate set under different encoding configurations.
In an all intra (AI) configuration, all frames are in all intra mode, so a historical APS cannot be used and therefore no historical candidate set will be formed.
In random access (RA) configuration, an ALF APS historical candidate set is cleared every time an I-frame is passed, which limits the effectiveness of a historical APS.
In low delay (LD) configuration, due to that in the official configuration of LD, all video blocks belong to the same time layer, so B/P frames may not be limited from the time layer in the acquisition for the historical set. And there is no mechanism for clearing the historical candidate set under LD, and the already transmitted APS may always exist in the ALF APS historical candidate set when it is not overwritten by a new APS with a same identity (ID) number.
An ALF decision refers to determining a filtering coefficient of ALF among the ALF decision candidate items. FIG. 5 is a schematic diagram of an instance of an ALF decision candidate item provided by one embodiment. As shown in FIG. 5, an ALF decision candidate item includes the following four options.
Option 1: in a case where aalf_enable_flag=0, ALF is skipped.
In a case where alf_enable_flag=1, there are three options available.
Option 2: new ALF APS, which indicates that an index of a new APS and a filtering coefficient of the new APS are required to be transmitted.
Option 3: fixed filter set (i.e., offine-trained filter set), which indicates that only an index of a fixed filter set is transmitted. The fixed filter sets are trained offline. In a case of determining to use a fixed filter set, it is also necessary to determine an index of the fixed filter set.
Option 4: historical APS, which indicates only an index of a historical APS is transmitted. The historical APS is calculated online from previous frames.
In the ALF decision process, the rate distortion criterion is used for judgment. In a judgment process, a decision factor may be introduced. The decision factor needs to be calculated before encoding the current video block, and parameters such as a quantization parameter (QP) and other parameters in the configuration are required to be used for the calculation. Since different component characteristics for luminance and chrominance, and settings for a fixed function are also varies slightly, so decision factors for different ALF filtering modes are different.
Due to the fact that mainstream video compression is lossy compression, the rate distortion criterion is used as a tool to measure compression performance, and is the most widely used technique in video compression encoding. Almost all encoding modules are required to be judged through the use of the rate distortion criterion, thus to determine a final encoding mode. The rate distortion criterion is based on the principle of rate distortion optimization (RDO), which establishes an optimization problem by minimizing distortion under the constraint of a encoding bit rate, and is shown in formula (1):

$$\min_{X} D(X), s.t. R(X) < R_c \qquad \text{Formula (1)}$$

where D is distortion. Due to the absence of time-domain and frequency-domain transformations in the in-loop filtering process, the distortion D is uniformly defined as a minimum mean square error MSE. R is a bit rate, and X may represent a partition structure, a prediction mode, a transformation coefficient, etc. In the ALF module, upon making decisions in slice level, X is determined within a range of ALF decision candidate item identifier shown in FIG. 5, including skipping ALF, adopting new APS, fixed filter set, and historical APS.
The constrained problem in the above formula may be transformed into an unconstrained problem by introducing a decision factor (such as a Lagrange factor (i.e., lambda $\lambda$)), as shown in formula (2):

$$\min_{X} J = D(X) + \lambda \cdot R(X) \qquad \text{Formula (2)}$$

where J represents a rate distortion cost. The rate distortion cost may accurately illustrate the combined effects of a number of bits required for the current mode and the distortion after the mode is applied. To determine the superiority or inferiority of two filter sets, simply compare their rate distortion costs. A lower mode cost indicates better compression performance.

In general, a value of the Lagrange factor in video encoding has a fixed functional relationship with a QP of a current slice. The Lagrange factor needs to be calculated before encoding for the current slice, and the QP and other parameters in the configuration may be used for calculation. Due to the different characteristics in luminance component and chrominance component, the settings for the fixed function mentioned above also varies slightly, resulting in different Lagrange factors for different components.

Moreover, formats of input videos in existing video encoding standards (H.265/High Efficiency Video Coding (HEVC), H.266/VVC, etc.) are all YUV files. Compared to red green blue (RGB) files, the luma and chroma (YUV) file formats may undergo a compression process during source acquisition. A sample in an RGB file consists of three components: R, G, and B, while a sample in a YUV file consists of three components: Y, U, and V. Due to the fact that the human visual system is more sensitive to the Y component and less sensitive to the U and V components, formats such as Y: U: V data ratios of 4:2:0, 4:2:2, and 4:4:4 have emerged.

In order to comprehensively test the overall performance of the standard reference software, there are differences in resolution, bit depth, content features, and other aspects among different categories of video sequences in the general test sequences of the H.266/VVC standard. Table 1 shows feature differences of the general test sequences of the H.266/VVC standard. A video resolution measures a sample width and a sample height of a video, which helps to determine the quality of the video and the clarity or realism of its display. A video bit depth is mainly used to express a number of bits used for a single color component of a sample, also commonly referred to as a color depth or a quantization depth, which determines an accuracy degree of color that a digital picture is capable of expressing. A video content feature often includes a texture complexity and a motion complexity. A texture usually refers to a locally irregular but macroscopically regular characteristic in a picture. The texture complexity is a representation indication of the content feature in spatial domain, including a mean, a variance, a contrast, a dissimilarity, a correlation, an entropy, etc. Motion usually refers to a change in picture content between video frames, and the motion complexity is a representation indication of the content feature in time domain, including an amount of time variation (intense/slow) in the video sequence.

Table 1 Feature Differences of General Test Sequences of the H.266/VVC Standard

| Class | Resolution | Bit depth | Content feature |
|---|---|---|---|
| Class A1/A2 | 3840*2160 | 10 bits | Texture complexity (homogeneous/heterogeneous) |
| Class B | 1920*1080 | 8 or 10 bits | |
| Class C | 832*480 | 8 bits | Motion complexity (intense/slow) |
| Class D | 416*240 | 8 bits | |
| Class E | 1280*720 | 8 bits | |
| Class F | Screen content | 8 bits | |

In summary, the ALF technology applies the idea of Wiener filter, and takes the MSE between the original frame and the reconstructed frame as the optimization purpose, and lists the Wiener Hough formula related to the original frame and the reconstructed frame, thus to obtain the final ALF filtering coefficients according to a result for solving the formula. The goal of improving the peak signal-to-noise ratio of the picture may be achieved by reducing the MSE more directly. In the ALF technology, an ALF adaptation parameter set (APS) is used to transmit ALF filtering coefficients. The ALF APS may include filtering coefficients corresponding to four filtering modes: luma ALF APS, chroma ALF APS, cross-component adaptive loop filter (CCALF) Cb APS, and CCALF Cr APS.

In the current ALF technology, for a slice, decision processes of whether to use a new APS in the four filtering modes of the luma ALF, the chroma ALF, the CCALF Cb, and the CCALF Cr are relatively independent, and comparison and judgement are performed independently for the respective filtering modes based on their own performances. In the judgment processes, decision factors corresponding to the respective filtering modes may be used for judgment. However, upon transmitting APS related to the ALF, different filtering modes may share the same ALF APS identifier (ID). If for the same slice, all four types of APSs are decided as being required to be transmitted, then the four types of APSs share one ID, and benefits of this APS ID may be maximized. Relatively speaking, if only one type of APS is transmitted within an ALF APS ID, then one ALF APS ID only corresponds to one APS, and several APS previously corresponding to that ID may also be overwritten. This may actually reduce the number of APSs corresponding to certain ALF modes in the ALF APS historical candidate set. Upon updating ALF APS, if there are fewer types of APS transmitted within the same ALF APS ID, it may result in fewer historical candidate sets in the ALF decision process, and the role of ALF cannot be fully utilized.

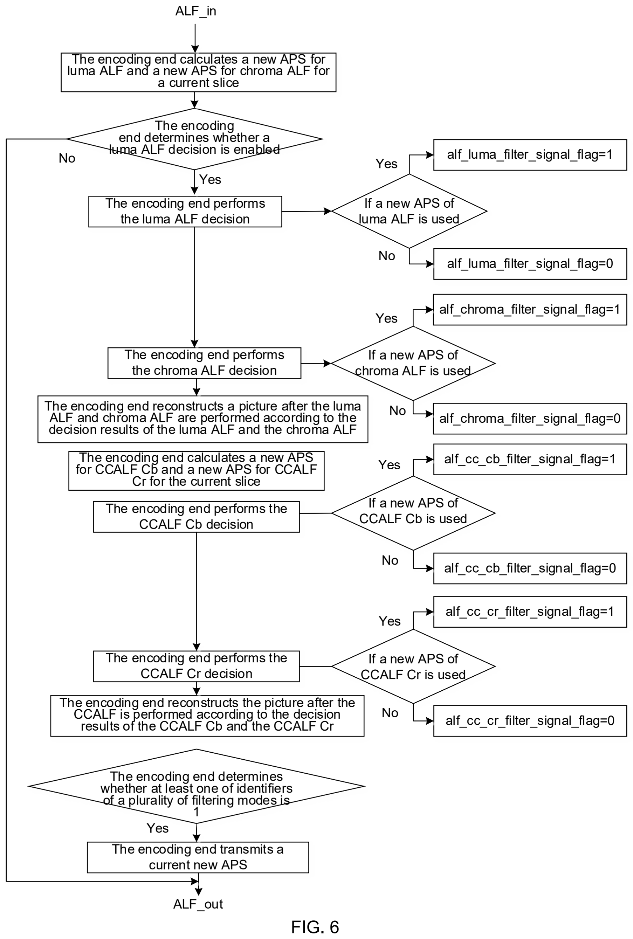

For example, as shown in FIG. 6, a process at an encoding end of the ALF in the existing mechanism is as follows.

(1) The encoding end calculates a new APS for luma ALF and a new APS for chroma ALF for a current slice.

(2) The encoding end determines whether a luma ALF decision is enabled.

If the luma ALF decision is not enabled, the encoding end may not perform ALF filtering.

(3) If the luma ALF decision is enabled, the encoding end performs the luma ALF decision.

RDO decision is performed within skipping ALF, new APS, fixed filter set, and historical APS. If in a decision result, a new luma APS is used, alf_luma_filter_signal_flag needs to be set to 1, otherwise it is set to 0.

(4) If the luma ALF decision is enabled, the encoding end performs the chroma ALF decision.

RDO decision is performed within skipping ALF, new APS, and historical APS. If in a decision result, a new chroma APS is used, alf_chroma_filter_signal_flag needs to be set to 1, otherwise it is set to 0.

(5) The encoding end reconstructs a picture after the luma ALF and chroma ALF are performed according to the decision results of the luma ALF and the chroma ALF.

(6) The encoding end calculates a new APS for CCALF Cb and a new APS for CCALF Cr for the current slice.

(7) If the luma ALF decision is enabled, the encoding end performs the CCALF Cb decision.

RDO decision is performed within skipping ALF, new APS, and historical APS. If in a decision result, a CCALF Cb new APS is used, alf_cc_cb_filter_signal_flag needs to be set to 1, otherwise it is set to 0.

(8) If the luma ALF decision is enabled, the encoding end performs the CCALF Cr decision.

RDO decision is performed within skipping ALF, new APS, and historical APS. If in a decision result, a CCALF Cr new APS is used, alf_cc_cr_filter_signal_flag needs to be set to 1, otherwise it is set to 0.

(9) The encoding end reconstructs the picture after the CCALF is performed according to the decision results of the CCALF Cb and the CCALF Cr.

(10) The encoding end determines whether at least one of identifiers of a plurality of filtering modes is 1.

The identifiers of the plurality of filtering modes include: alf_luma_filter_signal_flag, alf_chroma_filter_signal_flag, alf_cc_cb_filter_signal_flag, and alf_cc_cr_filter_signal_flag.

That is, alf_luma_filter_signal_flag v alf_chroma_filter_signal_flag v alf_cc_cb_filter_signal_flag v alf_cc_cr_filter_signal_flag == 1.

If at least one of the above four identifiers is 1, the encoding end performs (11).

(11) The encoding end transmits a current new APS.

That is to say, if at least one of the four identifiers mentioned above is 1, the encoding end may transmit the current new APS to the bitstream.

It can be understood that in the existing mechanism, there may be a decision factor indicating not to use a new APS for a certain filtering mode among the four types of filtering, resulting in a smaller number of new APSs adopted for the video block. Therefore, after storing the plurality of new APSs adopted for the video block in the ALF APS historical candidate set, the number of APS corresponding to a certain filtering mode in the ALF APS historical candidate set may reduce. In this way, the design scheme for ALF decision factor is inadequate, which may result in the phenomenon of a large amount of dominant transmission of luma ALF APS, and absence in ALF APS related to chroma (chroma ALF APS, CCALF Cb APS, and CCALF Cr APS), thus leading to a lower filling degree of the ALF APS historical candidate set.

Furthermore, although ALF may effectively improve the subjective and objective quality of encoding and decoding videos, existing mechanisms have not taken into account the influence of video characteristics on ALF decision factors in ALF decision process and ALF APS updating process. Therefore, upon optimizing the ALF decision factor design scheme, fully considering video classification or various video characteristics may improve the ALF APS utilization efficiency more targetedly.

In order to solve the above problems, a management method for adaptation parameter set is provided in the embodiments of the present disclosure, and the management method for adaptation parameter set provided in the embodiments of the present disclosure is applied to various filtering optimization scenarios related to video encoding, including but not limited to video transmission and storage, video conferencing systems, video monitoring systems, etc.

In the present disclosure, H.266/VVC is taken as an example for description, which is applicable to any video encoding and decoding scheme containing ALF parameter sets. Based on the existing ALF mechanism in the VVC, there is a problem of insufficient filling in ALF APS, especially for components related to chroma, including chroma APS, CCALF Cb APS, and CCALF Cr APS. Therefore, in the present disclosure, transmissions of luma APS, chroma APS, CCALF Cb APS, and CCALF Cr APS are recommended as much as possible by setting appropriate constraints and triggering conditions, in order to increase the filling degree of the ALF APS historical candidate set on different components, increase the number of ALF APS historical sets, and enhance the usage effectiveness of ALF. For example, according to the decision result of luma ALF, such as in a case where it is confirmed that the luma APS is to be transmitted, a Lagrange factor within the ALF related to chroma may be adaptively adjusted based on video features to optimize the ALF decision related to chroma.

That is to say, due to many gaps in the APS historical candidate sets for different filtering modes (such as luma ALF, chroma ALF, CCALF Cb, CCALF Cr), the picture optimization effect of filtering techniques in video encoding has not been fully utilized. Therefore, the embodiments of the present disclosure propose to adaptively correct the Lagrangian factors in different filtering modes according to the video content and/or video features based on the ALF decision result and/or the filling degree of related APS historical candidate set, so that the corrected Lagrangian factors are more inclined to perform filter in the RDO decision process, and inclined to use new APS in filtering, to ensure that there are more new APS for the video block under different filtering modes. Further, after all new APS for the video block are added to the ALF APS historical candidate set, reducing of the APSs corresponding to a certain filtering mode in the ALF APS historical candidate set is avoided, so as to enhance the filling degree of the ALF APS historical candidate set and maximize the optimization effect of filtering techniques, thereby further improving encoding efficiency and picture quality.

It should be noted that the present disclosure is not limited to the H.266/VVC standard.

Below is an introduction to an implementation environment of the embodiments of the present disclosure.

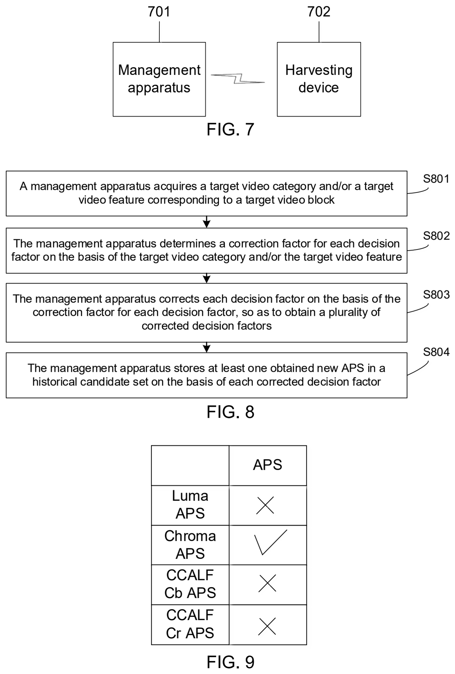

As shown in FIG. 7, it is a schematic diagram of a communication system provided in the embodiments of the present disclosure, and the communication system may include: a management apparatus 701 and a harvesting device 702. The management apparatus 701 may communicate with the harvesting device 702 through wired/wireless ways.

The harvesting device 702 may harvest a video, and send the harvested video to the management apparatus 701.

The management apparatus 701 may acquire a video block of the video from the harvesting device 702 and determine a video class and a video feature corresponding to the video block. Next, the management apparatus 701 may correct a decision factor of each filtering mode according to the video class and the video feature corresponding to the video block, so that the corrected decision factor is more inclined to perform filtering and use a new APS during filtering. Afterwards, the management apparatus 701 may store at least one obtained new APS to an ALF APS historical candidate set according to respective corrected decision factors.

It should be noted that the harvesting device 702 is not limited in the embodiments of the present disclosure. For example, the harvesting device 702 may be a driving recorder. As another example, the harvesting device 702 may be a mobile phone with a video shooting function. As another example, the harvesting device 702 may be a monitoring camera.

In the embodiments of the present disclosure, the management apparatus 701 may be a terminal, or the management apparatus 701 may be a server.

The terminal may be a mobile phone, a pad, a desktop computer, a laptop computer, a handheld computer, a notebook computer, an ultra-mobile personal computer (UMPC), a netbook or other devices with sending and receiving functions. A specific shape and form of the terminal is not particularly limited in the embodiments of the present disclosure. The terminal may interact with a user through one or more manners such as keyboard, touchpad, touch screen, remote controller, voice interaction, or handwriting device.

A server may be a standalone physical server, or may be a server cluster composed of multiple servers. Alternatively, the server cluster can also be a distributed cluster. Alternatively, the server may be a cloud server. A specific implementation of the server is not limited in the embodiments of the present disclosure.

After introducing the application scenarios and the implementation environment of the embodiments of the present disclosure, the following provides a detailed introduction to the management method for adaptation parameter set provided in the embodiments of the present disclosure in conjunction with the above implementation environment.

A management method for adaptation parameter set is provided in the embodiments of the present disclosure, as shown in FIG. 8, the management method for adaptation parameter set may include S801-S804.

In S801, a management apparatus acquires a target video class and/or a target video feature corresponding to a target video block.

In one implementation, the target video class is a video class of the target video block, and the target video feature is a video feature of the target video block.

That is to say, every time a video block is filtered in the present disclosure, the video class and the video feature of the filtered video block are determined, which provides valuable reference for the subsequent correction on decision factors for different filtering modes and improves the accuracy of a correction result.

Optionally, the target video block may be a video block in a video to be processed. Correspondingly, the target video class is a video class of the video to be processed, and the target video feature is a video feature of the video to be processed.

That is to say, upon filtering all video blocks in a video in the present disclosure, a video class and a video feature of the entire video are merely needed to be determined, and the video class and the video feature of the entire video are taken as the corresponding video class and video feature for respective video blocks in the video. In this way, a number of times to determine the video class and feature may be reduced, and the efficiency of correcting subsequent decision factors may be improved.

It should be noted that a type of target video block is not limited in the embodiments of the present disclosure, and the target video block may be in any of the following types: sub-picture, tile, slice, coding tree unit (CTU), coding unit (CU).

That is to say, the embodiments of the present disclosure may be applied to different types of filtering objects, improving a correction range for subsequent decision factors.

In S802, the management apparatus determines correction factors for respective decision factors according to the target video class and/or the target video feature.

A decision factor corresponds to a preset filtering mode, a decision factor is used to indicate whether to perform filtering on a video block, and to indicate to use any APS of a new APS, a historical APS from a historical candidate set, or a preset APS during filtering.

In the embodiments of the present disclosure, the preset filtering mode is any one of the following ALFs: chroma ALF, luma ALF, CCALF Cb, CCALF Cr.

That is to say, the embodiments of the present disclosure is applicable to the ALF process of videos, and the decision factors of different ALF modes are corrected during performing ALF on the video, so that the corrected decision factors may provide richer APSs for subsequent ALF, and the accuracy of a video filtering result may be improved.

In one implementation, a decision factor may be $\lambda$ in the RDO decision process.

That is to say, upon perform filtering on the video block, the management apparatus may determine whether needs to perform filtering on the video block and determine which APS to use during performing filtering on the video block through the RDO decision. In this way, the efficiency of video filtering may be improved, and the accuracy of the video filtering result may be improved.

In one implementation, the management apparatus stores a plurality of preset correction factors, a plurality of preset video classes, and/or a plurality of preset video features. One preset video class corresponds to one preset correction factor, and one preset video feature corresponds to one preset correction factor. The management apparatus may determine a preset video class that is the same as the target video class from the plurality of preset video classes according to the target video class, and take a preset correction factor corresponding to the preset video class that is the same as the target video class among the plurality of preset video classes as the correction factor for each decision factor, to determine the correction factors for the respective decision factors.

Optionally, the management apparatus may determine a preset video feature that is the same as the target video feature from the plurality of preset video features according to the target video feature, and take a preset correction factor corresponding to the preset video feature that is the same as the target video feature among the plurality of preset video features as the correction factor for each decision factor, to determine the correction factors for the respective decision factors.

In one implementation, the management apparatus stores a plurality of preset correction factors, a plurality of preset video weights, a plurality of preset video classes, a plurality of preset video features, a plurality of preset class weights, and a plurality of preset feature weights. One preset video weight corresponds to one preset correction factor, one preset class weight corresponds to one preset video class, and one preset feature weight corresponds to one preset video feature. The management apparatus may determine a preset video class that is the same as the target video class from the plurality of preset video classes according to the target video class, and take a preset class weight corresponding to the preset video class that is the same as the target video class as a target class weight corresponding to the target video class.

Similarly, the management apparatus may determine a preset video feature that is the same as the target video feature from the plurality of preset video features according to the target video feature, and take a preset feature weight corresponding to the preset video feature that is the same as the target video feature as a target feature weight corresponding to the target video class.

Next, the management apparatus determines a target video weight of the target video block by summing the target class weight and the target feature weight. Afterwards, the management apparatus may determine a preset video weight that is the same as the target video weight from the plurality of preset video weights according to the target video weight, and take a preset correction factor corresponding to the preset video weight that is the same as the target video weight among the plurality of preset video weights as a correction factor for each decision factor, to determine the correction factors for the respective decision factors.

In S803, the management apparatus corrects the respective decision factors according to the correction factors for the respective decision factors to obtain a plurality of corrected decision factors.

A probability that a corrected decision factor indicates to perform filtering is higher than a probability that a corresponding decision factor before correction indicates to perform filtering, and a probability that a corrected decision factor indicates to use a new APS during filtering is higher than a probability that a corresponding decision factor before correction indicates to use a new APS during filtering.

In one implementation, the management apparatus may determine a corrected decision factor by calculating a product of a decision factor and a corresponding correction factor.

The impact of a decision factor before and after correction on the APS used in the filtering mode are introduced below with some examples.

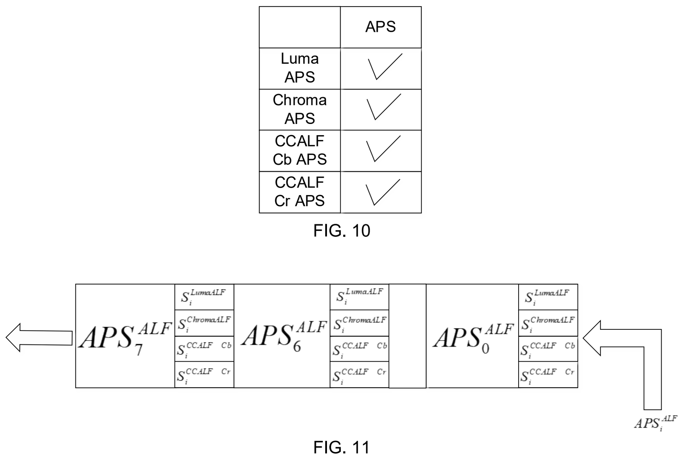

Exemplarily, taking a filtering mode being the ALF mode as an example, FIG. 9 is a schematic diagram of an ALF APS provided in an embodiment, which shows APSs of different ALF modes determined through a decision factor before correction, where a check mark " √ " indicates to use a new APS, and a cross mark "×" indicates not to use a new APS, that is, only the new APS is used for the chroma ALF APS, and for other three filtering modes, the new APS is not used. FIG. 10 is a schematic diagram of an ALF APS provided in another embodiment, which shows APSs of different ALF modes determined through a corrected decision factor for the target video block. For all four filtering modes, the new APS is used.

That is to say, compared with FIG. 9, 3 new APSs are added for the ALF APS obtained shown in FIG. 10. These three new APSs may be updated to historical filtering parameters corresponding to the filtering mode subsequently, thereby improving the filling degree of the historical candidate set.

In S804, the management apparatus stores at least one obtained new APS to the historical candidate set according to respective corrected decision factors.

In one implementation, the management apparatus may determine a plurality of first filtering modes to be performed on the target video block among the plurality of preset filtering modes through the RDO decision according to respective corrected decision factors. According to the respective corrected decision factors, at least one second filtering mode using a new APS may be determined from the plurality of first filtering modes, and the new APS used for each second filtering mode may be obtained to obtain at least one new APS. Afterwards, the management apparatus may store the at least one obtained new APS to the historical candidate set.

In one implementation, the historical candidate set may be an ALF APS historical candidate set, and the historical candidate set may include a plurality of historical APSs and a plurality of preset identifiers. One preset identifier corresponds to at least one historical APS, and different preset identifiers are sorted in a time order. In a process of storing the at least one obtained new APS by the management apparatus to the historical candidate set, the management apparatus may delete all historical APSs corresponding to a first identifier in the historical candidate set, where the first identifier is an identifier among the plurality of preset identifiers, and a moment corresponding to the first identifier is earlier than a moment corresponding to any identifier other than the first identifier among the plurality of preset identifiers. Afterwards, the management apparatus may store the at least one new APS to the historical candidate set, and update a correspondence between preset identifiers and APSs in the historical candidate set according to a moment of storing the at least one new APS to the historical candidate set, so that a moment corresponding to a second identifier corresponding to the at least one new APS among the plurality of preset identifiers is later than a moment corresponding to any identifier other than the second identifier among the plurality of preset identifiers.

Exemplarily, FIG. 11 is a schematic diagram of an ALF APS historical candidate set provided in an embodiment. As shown in FIG. 11, during the ALF operation process, the ALF APS historical candidate set may also be maintained, which plays a major role in acquisition of historical APS. In a case where a new APS is determined to be used, the ALF APS historical candidate set may also be updated according to the first-in first-out rule. The acquisition of historical APS in ALF relies on the ALF APS historical candidate set. It should be noted that a historical APS may also be referred to as a historical filtering parameter.

Both the encoding end and the decoding end may construct the ALF APS historical candidate set in the same way. Up to N APSs are maintained in the internal of a bitstream, with ID (also known as index) numbers ranging from 0 to N-1. Each APS includes historical APSs of four types of filtering modes: $S_i^{LumaALF}$, $S_i^{ChromaALF}$, $S_i^{CCALF\ Cb}$, and $S_i^{CCALF\ Cr}$. In FIG. 10, N being 8 is taken as an example for explanation. Whenever a new APS is used, an old APS is overwritten by a new APS with a same ID number. An ID number of a new APS corresponds to the target video block, which means that the ID number of the new APS may be determined according to the target video block.

That is to say, the management apparatus adds the plurality of new APSs used for the current video block to the historical candidate set, providing valuable reference for filtering subsequent video blocks in the video and improving the accuracy of the filtering result of the entire video.

It can be understood that upon making filtering decisions for different filtering modes, the decision factors in the filtering decision process are corrected based on the video class and video feature corresponding to the video block, so that the corrected decision factors are more inclined to perform filtering during the filtering decision process, and inclined to use the new APS during filtering, ensuring that there are more new APSs for the video block under different filtering modes. After all new APSs for the video block are added to the historical candidate set, it is avoided to reduce the number of APSs corresponding to a certain filtering mode in the historical candidate set, ensuring the filling degree of the historical candidate set.

In some embodiments, during the process of acquiring the target video class corresponding to the target video block by the management apparatus, the management apparatus may acquire a target video content of the target video block and determine at least one content feature of the target video content, and the content feature is an optical flow feature, a frequency domain feature, a spatial feature, or a depth feature. Next, the management apparatus may classify the target video block and determine the target video class according to the at least one content feature.

It should be noted that the main goal of video classification is to understand the content contained in the video and determine one or more key themes corresponding to the video. In the video classification, a video classification algorithm may be used to automatically analyze semantic information contained in the video or video clips, annotate, classify, and describe the video automatically, achieving accuracy comparable to artificial classification.

For the video classification, an optical flow feature, a frequency domain feature, a spatial feature, a depth feature, etc., of the video content are usually considered. The optical flow feature may reflect motion of an object in the video, and the optical flow feature be extracted by calculating motion vectors of samples between adjacent frames in the video to obtain an optical flow field. The frequency domain feature may reflect periodic changes in the video (such as periodic motion in the video), and the frequency domain feature may be obtained by performing Fourier transform on the video. The spatial feature may reflect an appearance and form of an object in a video, and the spatial feature (such as color, texture, shape, etc.) may be extracted by processing respective frames in the video. The depth feature may reflect semantic information of an object in the video, such as a class, attributes, etc., of the object, and the depth feature may be extracted from the video using the deep learning technique. By comprehensively utilizing the above features, the video content may be described more comprehensively, thereby improving the accuracy and robustness of video classification.

It can be understood that in the ALF, a current sample may be compared with surrounding samples, and smoothing processing is performed on the current sample, thus redundant information in the video may be reduced, noise and interference in the picture or video may be removed, thus to achieve the goal of enhancing video and picture quality. Based on the video classification, the in-loop filtering technology may be associated with a main feature and motion information of the video, in order to implement more targeted or personalized filtering schemes for different class of videos, and improve video encoding and decoding performance. Preferably, a Lagrangian factor within the ALF may be adaptively corrected based on the video classification, that is, an optimal Lagrangian factor correction parameter corresponding to each video class may be tested and determined in advance, and then the corresponding optimal Lagrangian factor correction parameter may be selected according to a class of the current video or video block (such as a sub-picture, a tile, a slice, a coding unit of CTU or CU).

In some embodiments, the target video feature includes at least one of: a picture resolution, a texture complexity, a motion complexity, or a color histogram.

It should be noted that Lagrange factor adjustment based on the video feature refers to extracting useful information from the video by analyzing the video feature, and constructing a fitting relationship between the useful information and an optimal Lagrange factor value (corresponding to the best video quality). Therefore, in actual video encoding, the optimal Lagrange factor correction parameter corresponding to the encoding object may be obtained by extracting the video feature of the current video or video block (such as a sub-picture, a tile, a slice, a coding unit of CTU or CU). In acquisition of the video feature, appropriate feature extraction manners may be selected according to specific application scenarios and requirements. Common video features include a picture resolution, a texture complexity, a motion complexity (such as an optical flow), color histogram, etc.

It can be understood that by determining different types of video features, valuable reference may be provided for the correction of decision factors, and the accuracy of the corrected decision factors may be improved.

The management method for adaptation parameter set provided in the embodiments of the present disclosure is introduced below with some examples.

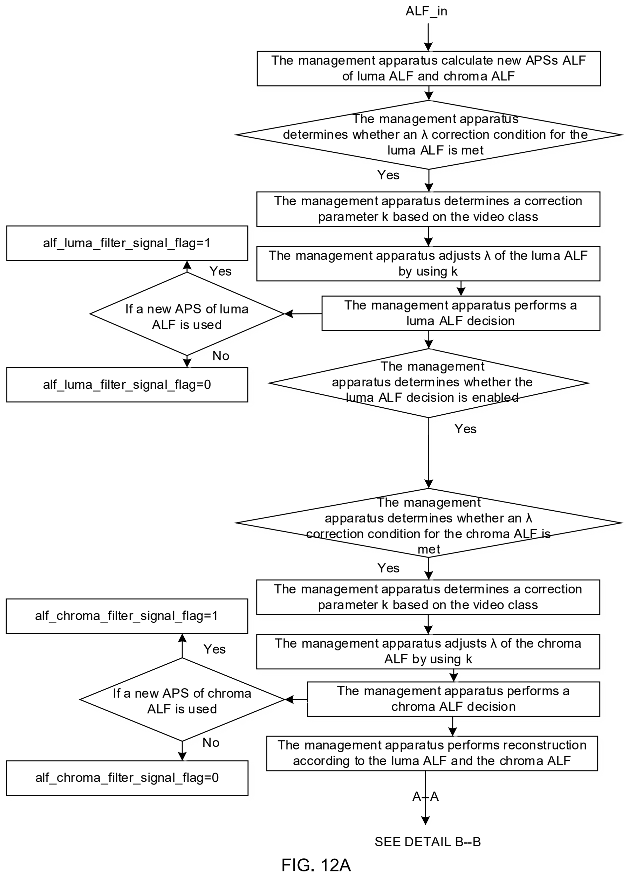

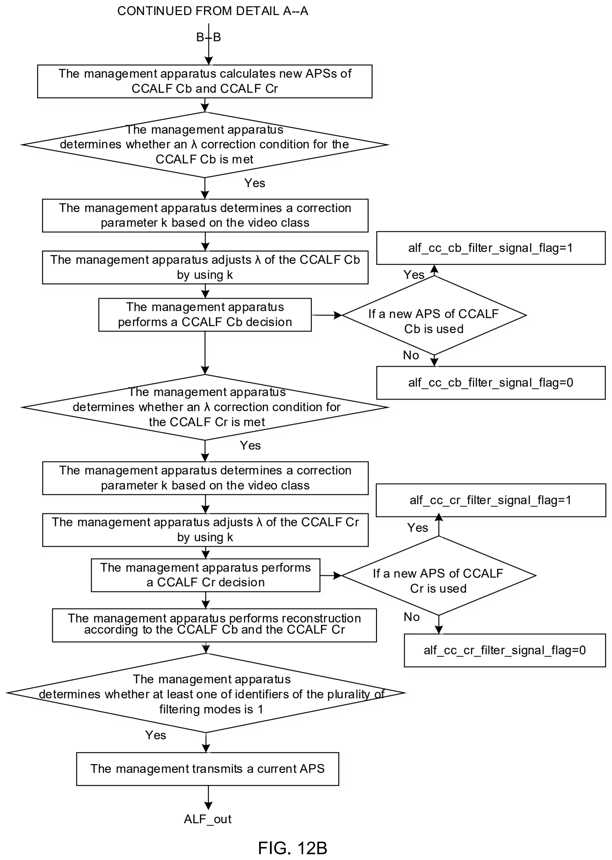

Exemplarily, taking correcting decision factors based on the video class as an example, combined with FIG. 12A and FIG. 12B, the management method for adaptation parameter set includes the following operations.

Operation 1: the management apparatus calculate new APSs ALF of luma ALF and chroma ALF.

The management apparatus calculates the new APS $S_i^{LumaALF}$ of the luma ALF and the new APS $S_i^{ChromaALF}$ of the chroma ALF for the current slice according to the principle of Wiener filtering.

Operation 2: the management apparatus adjusts λ within the luma ALF.

Operation 2-a: the management apparatus determines whether a λ correction condition for the luma ALF is met.

It should be noted that in this embodiment, it is preferable to introduce a Lagrangian factor correction condition, which means that the Lagrangian factor may be adjusted based on the video class in a case where the correction condition is met, and the use of any correction condition is not limited in the present disclosure.

If the λ correction condition for the luma ALF is met, the management apparatus performs operation 2-b.

If the λ correction condition for the luma ALF is not met, the management apparatus performs operation 2-d.

Operation 2-b: the management apparatus determines a correction parameter k of the Lagrangian factor based on the class (i.e., video class) to which the video or video block belongs.

Operation 2-c: the management apparatus adjusts λ of the luma ALF by using k.

As shown in formula (3):

$$\lambda_{Scaled}^{Luma} = \begin{cases} k * \lambda_{VVC}^{Luma}, if \ \lambda \ \text{correction condiction for luma ALF is met} \\ \lambda_{VVC}^{Luma}, else \end{cases} \qquad \text{Formula (3)}$$

Operation 2-d: the management apparatus performs a luma ALF decision.

A RDO decision is performed in the following candidate modes:

(1) Skipping ALF;
(2) New APS;
(3) Fixed filter set (i.e., preset APS);
(4) Historical APS.

If a decision result is "using a new APS of luma ALF", then alf_luma_filter_signal_flag needs to be set to 1, otherwise it needs to be set to 0.

Operation 3: the management apparatus determines whether the luma ALF decision is enabled.

If the luma ALF decision is not enabled, the management apparatus may not perform ALF filtering.

If the luma ALF decision is enabled, the management apparatus performs operation 4.

Operation 4: the management apparatus adjusts $\lambda$ within the chroma ALF.

Operation 4-a: the management apparatus determines whether a $\lambda$ correction condition for the chroma ALF is met.

If the $\lambda$ correction condition for the chroma ALF is met, the management apparatus performs operation 4-b.

If the $\lambda$ correction condition for the chroma ALF is not met, the management apparatus performs operation 4-d.

Operation 4-b: the management apparatus determines a correction parameter k of the Lagrangian factor based on the class (i.e., video class) to which the video or video block belongs.

Operation 4-c: the management apparatus adjusts $\lambda$ of the chroma ALF by using k.

As shown in formula (4):

$$\lambda^{Chr}_{Scaled} = \begin{cases} k * \lambda^{Chro}_{VVC} & , if \ \lambda \ \text{correction condiction for chroma ALF is met} \\ \lambda^{Chroma}_{VVC}, else \end{cases} \qquad \text{Formula (4)}$$

Operation 4-d: the management apparatus performs a chroma ALF decision.

A RDO decision is performed in the following candidate modes:

(1) Skipping ALF;
(2) New APS;
(3) Fixed filter set;
(4) Historical APS.

If a decision result is "using a new APS of chroma ALF", then alf_luma_filter_signal_flag needs to be set to 1, otherwise it needs to be set to 0.

Operation 5: the management apparatus performs reconstruction according to the luma ALF and the chroma ALF.

The management apparatus reconstructs a picture after the luma ALF and the chroma ALF is performed according to decision results of luma ALF and chroma ALF.

Operation 6: the management apparatus calculates new APSs of CCALF Cb and CCALF Cr.

The management apparatus calculates the new APS $S^{CCALF\ Cb}_i$ of the CCALF Cb and the new APS $S^{CCALF\ Cr}_i$ of the CCALF Cr for the current slice according to the principle of Wiener filtering.

Operation 7: the management apparatus adjusts $\lambda$ within CCALF Cb.

Operation 7-a: the management apparatus determines whether a $\lambda$ correction condition for the CCALF Cb is met.

If the $\lambda$ correction condition for the CCALF Cb is met, the management apparatus performs operation 7-b.

If the $\lambda$ correction condition for the CCALF Cb is not met, the management apparatus performs operation 7-d.

Operation 7-b: the management apparatus determines a correction parameter k of the Lagrangian factor based on the class (i.e., video class) to which the video or video block belongs.

Operation 7-c: the management apparatus adjusts $\lambda$ of the CCALF Cb by using k.

As shown in formula (5):

$$\lambda^{Cb}_{Scaled} = \begin{cases} k * \lambda^{Cb}_{VVC}, if \ \lambda \ \text{correction condiction for CCALF Cb is met} \\ \lambda^{Cb}_{VVC}, else \end{cases} \qquad \text{Formula (5)}$$

Operation 7-d: the management apparatus performs a CCALF Cb decision.

A RDO decision is performed in the following candidate modes:

(1) Skipping ALF;
(2) New APS;
(3) Fixed filter set;
(4) Historical APS.

If a decision result is "using a new APS of CCALF Cb", then alf_cc_cb _filter_signal_flag needs to be set to 1, otherwise it needs to be set to 0.

Operation 8: the management apparatus adjusts $\lambda$ within the CCALF Cr.

Operation 8-a: the management apparatus determines whether a $\lambda$ correction condition for the CCALF Cr is met.

If the $\lambda$ correction condition for the CCALF Cr is met, the management apparatus performs operation 8-b.

If the $\lambda$ correction condition for the CCALF Cr is not met, the management apparatus performs operation 8-d.

Operation 8-b: the management apparatus determines a correction parameter k of the Lagrangian factor based on the class (i.e., video class) to which the video or video block belongs.

Operation 8-c: the management apparatus adjusts $\lambda$ of the CCALF Cr by using k.

As shown in formula (6):

$$\lambda_{Scaled}^{Cr} = \begin{cases} k * \lambda_{VVC}^{Cr}, if\ \lambda\ \text{correction condiction for CCALF Cr is met} \\ \lambda_{VVC}^{Cr}, else \end{cases} \qquad \text{Formula (6)}$$

Operation 8-d: the management apparatus performs a CCALF Cr decision.

A RDO decision is performed in the following candidate modes:

(1) Skipping ALF;
(2) New APS;
(3) Fixed filter set;
(4) Historical APS.

If a decision result is "using a new APS of CCALF Cr", then alf_cc_cr _filter_signal_flag needs to be set to 1, otherwise it needs to be set to 0.

Operation 9: the management apparatus performs reconstruction according to CCALF Cb and CCALF Cr.

The management apparatus reconstructs a picture after the CCALF Cb and the CCALF Cr is performed according to decision results of the CCALF Cb and the CCALF Cr.

Operation 10: the management apparatus determines whether at least one of identifiers of the plurality of filtering modes is 1.

That is, alf_luma_filter_signal_flag ∨ alf_chroma_filter_signal_flag ∨ alf_cc_cb_filter_signal_flag ∨ alf_cc_cr_filter_signal_flag == 1.

If at least one of the above four identifiers is 1, the management apparatus performs operation 11.

If all of the above four identifiers are 0, the management apparatus does not need to perform operation 11.

Operation 11: the management transmits a current APS.

The management apparatus transmits the APS of the current transmission target filtering unit (i.e., the target video block) to the bitstream.

If there is already an APS with the same index, the new APS is directly taken to overwrite the old APS.

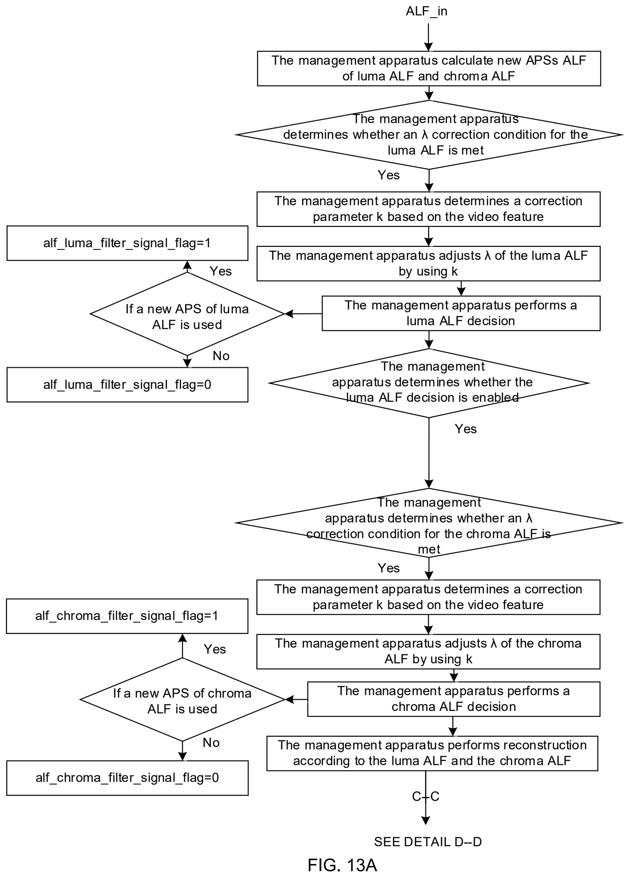

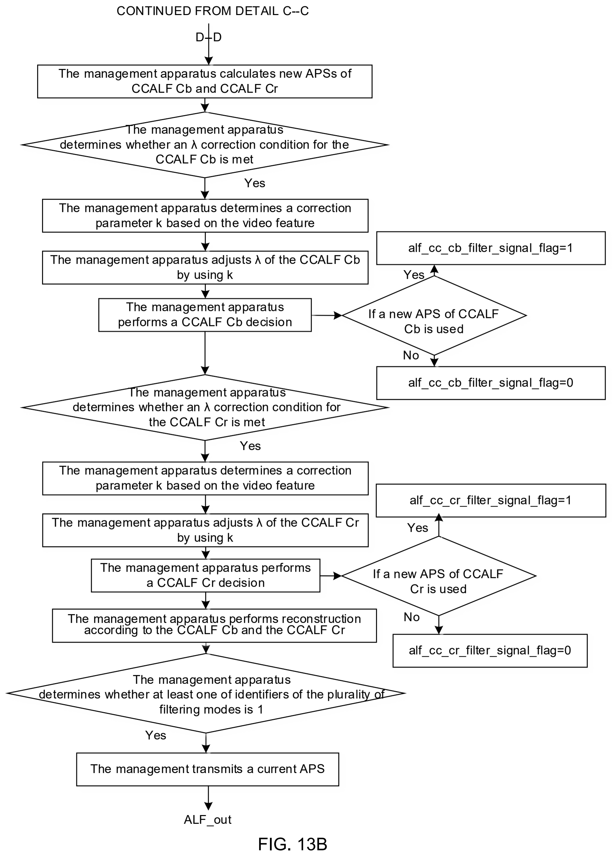

Exemplarily, taking correcting decision factors based on the video feature as an example, combined with FIG. 13A and FIG. 13B, the management method for adaptation parameter set includes the following operations.

Operation 1: the management apparatus calculate new APSs ALF of luma ALF and chroma ALF.

The management apparatus calculates the new APS $S_i^{LumaALF}$ of the luma ALF and the new APS $S_i^{ChromaALF}$ of the chroma ALF for the current slice according to the principle of Wiener filtering.

Operation 2: the management apparatus adjusts $\lambda$ within the luma ALF.

Operation 2-a: the management apparatus determines whether a $\lambda$ correction condition for the luma ALF is met.

It should be noted that in this embodiment, it is preferable to introduce a Lagrangian factor correction condition, which means that the Lagrangian factor may be adjusted based on the video feature in a case where the correction condition is met, and the use of any correction condition is not limited in the present disclosure.

If the $\lambda$ correction condition for the luma ALF is met, the management apparatus performs operation 2-b.

If the $\lambda$ correction condition for the luma ALF is not met, the management apparatus performs operation 2-d.

Operation 2-b: the management apparatus determines a correction parameter k of the Lagrangian factor based on the feature (i.e., video feature) of the video or video block.

Operation 2-c: the management apparatus adjusts λ of the luma ALF by using k.

As shown in formula (3):

$$\lambda_{Scaled}^{Luma} = \begin{cases} k * \lambda_{VVC}^{Luma}, if \ \lambda \ \text{correction condiction for luma ALF is met} \\ \lambda_{VVC}^{Luma}, else \end{cases}$$  Formula (3)

Operation 2-d: the management apparatus performs a luma ALF decision.

A RDO decision is performed in the following candidate modes:

(1) Skipping ALF;
(2) New APS;
(3) Fixed filter set (i.e., preset APS);
(4) Historical APS.

If a decision result is "using a new APS of luma ALF", then alf_luma_filter_signal_flag needs to be set to 1, otherwise it needs to be set to 0.

Operation 3: the management apparatus determines whether the luma ALF decision is enabled.

If the luma ALF decision is not enabled, the management apparatus may not perform ALF filtering.

If the luma ALF decision is enabled, the management apparatus performs operation 4.

Operation 4: the management apparatus adjusts λ within the chroma ALF.

Operation 4-a: the management apparatus determines whether a λ correction condition for the chroma ALF is met.

If the λ correction condition for the chroma ALF is met, the management apparatus performs operation 4-b.

If the λ correction condition for the chroma ALF is not met, the management apparatus performs operation 4-d.

Operation 4-b: the management apparatus determines a correction parameter k of the Lagrangian factor based on the feature (i.e., video feature) of the video or video block.

Operation 4-c: the management apparatus adjusts λ of the chroma ALF by using k.

As shown in formula (4):

$$\lambda_{Scaled}^{Chro} = \begin{cases} k * \lambda_{VVC}^{Chroma}, if \ \lambda \ \text{correction condiction for chroma ALF is met} \\ \lambda_{VVC}^{Chroma}, else \end{cases}$$  Formula (4)

Operation 4-d: the management apparatus performs a chroma ALF decision.

A RDO decision is performed in the following candidate modes:

(1) Skipping ALF;
(2) New APS;
(3) Fixed filter set;
(4) Historical APS.

If a decision result is "using a new APS of chroma ALF", then alf_luma_filter_signal_flag needs to be set to 1, otherwise it needs to be set to 0.

Operation 5: the management apparatus performs reconstruction according to the luma ALF and the chroma ALF.

The management apparatus reconstructs a picture after the luma ALF and the chroma ALF is performed according to decision results of luma ALF and chroma ALF.

Operation 6: the management apparatus calculates new APSs of CCALF Cb and CCALF Cr.

The management apparatus calculates the new APS $S_i^{CCALF \ Cb}$ of the CCALF Cb and the new APS $S_i^{CCALF \ Cr}$ of the CCALF Cr for the current slice according to the principle of Wiener filtering.

Operation 7: the management apparatus adjusts λ within CCALF Cb.

Operation 7-a: the management apparatus determines whether a λ correction condition for the CCALF Cb is met.

If the λ correction condition for the CCALF Cb is met, the management apparatus performs operation 7-b.

If the λ correction condition for the CCALF Cb is not met, the management apparatus performs operation 7-d.

Operation 7-b: the management apparatus determines a correction parameter k of the Lagrangian factor based on the feature (i.e., video feature) of the video or video block.

Operation 7-c: the management apparatus adjusts λ of the CCALF Cb by using k.

As shown in formula (5):

$$\lambda_{Scaled}^{Cb} = \begin{cases} k * \lambda_{VVC}^{Cb}, if \ \lambda \ \text{correction condiction for CCALF Cb is met} \\ \lambda_{VVC}^{Cb}, else \end{cases} \qquad \text{Formula (5)}$$

Operation 7-d: the management apparatus performs a CCALF Cb decision.

A RDO decision is performed in the following candidate modes:

(1) Skipping ALF;
(2) New APS;
(3) Fixed filter set;
(4) Historical APS.

If a decision result is "using a new APS of CCALF Cb", then alf_cc_cb _filter_signal_flag needs to be set to 1, otherwise it needs to be set to 0.

Operation 8: the management apparatus adjusts λ within the CCALF Cr.

Operation 8-a: the management apparatus determines whether a λ correction condition for the CCALF Cr is met.

If the λ correction condition for the CCALF Cr is met, the management apparatus performs operation 8-b.

If the λ correction condition for the CCALF Cr is not met, the management apparatus performs operation 8-d.

Operation 8-b: the management apparatus determines a correction parameter k of the Lagrangian factor based on the feature (i.e., video feature) of the video or video block.

Operation 8-c: the management apparatus adjusts λ of the CCALF Cr by using k.

As shown in formula (6):

$$\lambda_{Scaled}^{Cr} = \begin{cases} k * \lambda_{VVC}^{Cr}, if \ \lambda \ \text{correction condiction for CCALF Cr is met} \\ \lambda_{VVC}^{Cr}, else \end{cases} \qquad \text{Formula (6)}$$

Operation 8-d: the management apparatus performs a CCALF Cr decision.

A RDO decision is performed in the following candidate modes:

(1) Skipping ALF;
(2) New APS;
(3) Fixed filter set;
(4) Historical APS.

If a decision result is "using a new APS of CCALF Cr", then alf_cc_cr _filter_signal_flag needs to be set to 1, otherwise it needs to be set to 0.

Operation 9: the management apparatus performs reconstruction according to CCALF Cb and CCALF Cr.

The management apparatus reconstructs a picture after the CCALF Cb and the CCALF Cr is performed according to decision results of the CCALF Cb and the CCALF Cr.

Operation 10: the management apparatus determines whether at least one of identifiers of the plurality of filtering modes is 1.

That is, alf_luma_filter_signal_flag v alf_chroma_filter_signal_flag v alf_cc_cb_filter_signal_flag v alf_cc_cr_filter_signal_flag == 1.

If at least one of the above four identifiers is 1, the management apparatus performs operation 11.

If all of the above four identifiers are 0, the management apparatus does not need to perform operation 11.

Operation 11: the management transmits a current APS.

The management apparatus transmits the APS of the current transmission target filtering unit (i.e., the target video block) to the bitstream.

If there is already an APS with the same index, the new APS is directly taken to overwrite the old APS.

It can be understood that, in order to implement the above functions, the management apparatus for adaptation parameter set includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The management apparatus for adaptation parameter set may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

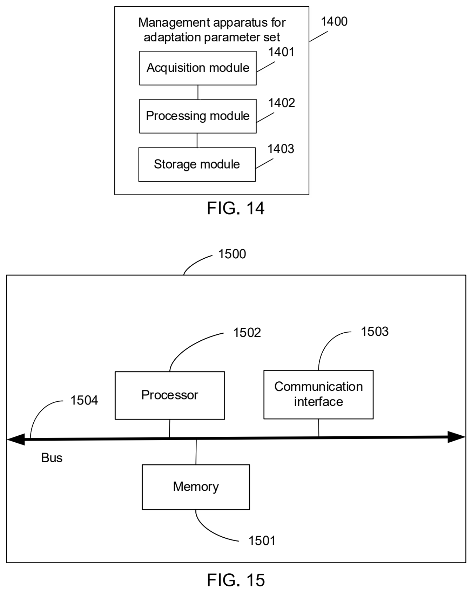

FIG. 14 is a structural schematic diagram of a management apparatus for adaptation parameter set provided in the embodiments of the present disclosure. The management apparatus 1400 for adaptation parameter set may perform the management method for adaptation parameter set shown in FIG. 8 of the above-mentioned method embodiments. As shown in FIG. 14, the management apparatus 1400 for adaptation parameter set includes: an acquisition module 1401, a processing module 1402, and a storage module 1403.

The acquisition module 1401 is configured to acquire a target video class and/or a target video feature corresponding to a target video block. The processing module 1402 is configured to determine correction factors for respective decision factors according to the target video class and/or the target video feature, where a decision factor corresponds to a preset filtering mode, a decision factor is used to indicate whether to perform filtering on a video block, and to indicate to use any APS of a new APS, a historical APS from a historical candidate set, or a preset APS during filtering. The processing module 1402 is further configured to correct the respective decision factors according to the correction factors for the respective decision factors to obtain a plurality of corrected decision factors, where a probability that a corrected decision factor indicates to perform filtering is higher than a probability that a corresponding decision factor before correction indicates to perform filtering, and a probability that a corrected decision factor indicates to use a new APS during filtering is higher than a probability that a corresponding decision factor before correction indicates to use a new APS during filtering. The storage module 1403 is configured to store at least one obtained new APS to the historical candidate set according to respective corrected decision factors.

Optionally, the historical candidate set includes a plurality of historical APSs and a plurality of preset identifiers, a preset identifier corresponds to at least one historical APS, and different preset identifiers are sorted in a time order. The processing module 1402 is configured to delete all historical APSs corresponding to a first identifier in the historical candidate set, where the first identifier is an identifier among the plurality of preset identifiers, and a moment corresponding to the first identifier is earlier than a moment corresponding to any identifier other than the first identifier among the plurality of preset identifiers. The storage module 1403 is further configured to store the at least one new APS to the historical candidate set. The processing module 1402 is further configured to update a correspondence between preset identifiers and APSs in the historical candidate set according to a moment of storing the at least one new APS to the historical candidate set, so that a moment corresponding to a second identifier corresponding to the at least one new APS among the plurality of preset identifiers is later than a moment corresponding to any identifier other than the second identifier among the plurality of preset identifiers.

Optionally, the acquisition module 1401 is configured to acquire a target video content of the target video block. The processing module 1402 is further configured to determine at least one content feature of the target video content, where a content feature is an optical flow feature, a frequency domain feature, a spatial feature, or a depth feature. The processing module 1402 is further configured to determine the target video class according to the at least one content feature.

Optionally, the target video feature includes at least one of: a picture resolution, a texture complexity, a motion complexity, or a color histogram.

Optionally, the target video block is a video block in a video to be processed. The target video class is a video class of the video to be processed, and the target video feature is a video feature of the video to be processed, or the target video class is a video class of the target video block, and the target video feature is a video feature of the target video block.

Optionally, a decision factor is a Lagrangian factor in a rate distortion optimization (RDO) decision process.

Optionally, a preset filtering mode is any one of the following adaptive loop filter (ALF): a chroma ALF, a luma ALF, a cross-component adaptive loop filter (CCALF) for a difference between a blue component and luma (Cb), or a CCALF for a difference between a red component and the luma (Cr).

Optionally, the target video block is in any one of the following types: sub-picture, tile, slice, coding tree unit (CTU), coding unit (CU).

In a case where the functions of the above-mentioned integrated modules are implemented in the form of hardware, another possible structure of an electronic device of the management apparatus for adaptation parameter set is provided in the embodiments of the present disclosure. As shown in FIG. 15, the management device 1500 for adaptation parameter set includes: a memory 1501, a processor 1502, a communication interface 1503, and a bus 1504.

The memory 1501 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 1502 may be a logical block, module or circuit for implementing or performing various exemplary methods described in combination with the embodiments of the present disclosure. The processor 1502 may be a central processor, a generalpurpose processor, a digital signal processor, an application specific integrated circuit, a field programmable gate array, or other programmable logic component, a transistor logic component, a hardware assembly, or any combination thereof. The processor 1502 may also implement or execute various illustrative logical blocks, modules and circuits described in conjunction with the embodiments of the present disclosure. The processor 1502 may also be a combination implements computing functions, such as a combination containing one or more microprocessors a combination of a DSP (digital signal processor) and a microprocessor, etc.

The communication interface 1503 is configured to connect to other devices through a communication network. The communication network may be the Ethernet, a radio access network, a wireless local area networks (WLAN), or the like.

In one implementation, the memory 1501 may exist independently from the processor 1502, and the memory 1501 may be connected to the processor 1502 through the bus 1504 for storing instructions or program codes. In a case where the processor 1502 invokes and executes instructions or program codes stored in the memory 1501, the management method for adaptation parameter set provided in the embodiments of the present disclosure may be implemented.

In one implementation, the memory 1501 may also be integrated with the processor 1502.

The bus 1504 may be an extended industry standard architecture (EISA) bus, or the like. The bus 1504 may be classified as an address bus, a data bus, a control bus, or the like. For ease of representation, only one bold line is used in FIG. 15 for representing the bus 1504, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the management method for adaptation parameter set as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the management method for adaptation parameter set as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

**Claims**

1. A management method for adaptation parameter set, **characterized by** comprising:

   acquiring a target video class and/or a target video feature corresponding to a target video block;
   determining correction factors for respective decision factors according to the target video class and/or the target video feature, wherein a decision factor corresponds to a preset filtering mode, a decision factor is used to indicate whether to perform filtering on a video block, and to indicate to use any APS of a new APS, a historical APS from a historical candidate set, or a preset APS during filtering;
   correcting the respective decision factors according to the correction factors for the respective decision factors to obtain a plurality of corrected decision factors, wherein a probability that a corrected decision factor indicates to perform filtering is higher than a probability that a corresponding decision factor before correction indicates to perform filtering, and a probability that a corrected decision factor indicates to use a new APS during filtering is higher than a probability that a corresponding decision factor before correction indicates to use a new APS during filtering; and

storing at least one obtained new APS to the historical candidate set according to respective corrected decision factors.

2. The method according to claim 1, wherein the historical candidate set comprises a plurality of historical APSs and a plurality of preset identifiers, a preset identifier corresponds to at least one historical APS, and different preset identifiers are sorted in a time order, and storing the at least one obtained new APS to the historical candidate set comprises:

deleting all historical APSs corresponding to a first identifier in the historical candidate set, wherein the first identifier is an identifier among the plurality of preset identifiers, and a moment corresponding to the first identifier is earlier than a moment corresponding to any identifier other than the first identifier among the plurality of preset identifiers; and

storing the at least one new APS to the historical candidate set, and updating a correspondence between preset identifiers and APSs in the historical candidate set according to a moment of storing the at least one new APS to the historical candidate set, so that a moment corresponding to a second identifier corresponding to the at least one new APS among the plurality of preset identifiers is later than a moment corresponding to any identifier other than the second identifier among the plurality of preset identifiers.

3. The method according to claim 1 or 2, wherein acquiring the target video class corresponding to the target video block comprises:

acquiring a target video content of the target video block;
determining at least one content feature of the target video content, wherein a content feature is an optical flow feature, a frequency domain feature, a spatial feature, or a depth feature; and
determining the target video class according to the at least one content feature.

4. The method according to claim 1 or 2, wherein the target video feature comprises at least one of: a picture resolution, a texture complexity, a motion complexity, or a color histogram.

5. The method according to claim 1 or 2, wherein the target video block is a video block in a video to be processed;

the target video class is a video class of the video to be processed, and the target video feature is a video feature of the video to be processed, or
the target video class is a video class of the target video block, and the target video feature is a video feature of the target video block.

6. The method according to claim 1 or 2, wherein a decision factor is a Lagrangian factor in a rate distortion optimization (RDO) decision process.

7. The method according to claim 1 or 2, wherein a preset filtering mode is any one of the following adaptive loop filter (ALF): a chroma ALF, a luma ALF, a cross-component adaptive loop filter (CCALF) for a difference between a blue component and luma (Cb), or a CCALF for a difference between a red component and the luma (Cr).

8. The method according to claim 1 or 2, wherein the target video block is in any one of the following types: sub-picture, tile, slice, coding tree unit (CTU), coding unit (CU).

9. An electronic device, **characterized by** comprising: a memory and a processor, wherein the memory is coupled to the processor, the memory is configured to store instructions executable for the processor, and the processor is configured, upon the instructions being executed, to perform the management method for adaptation parameter set according to any one of claims 1 to 8.

10. A computer-readable storage medium, **characterized in that** the computer-readable storage medium stores computer instructions that, upon being run on a computer, enable the computer to execute the management method for adaptation parameter set according to any one of claims 1 to 8.

An input video
being divided
into CTUs

Transformation,
quantization

Quantified transformation coefficient

Inverse quantization,
inverse transformation

Filter control
analysis

Filter control
data

Header
information
coding & CABAC

Output
bitstrem

Intra frame
estimation

Inter/intra
frame
selection

Intra frame
prediction

In-loop filtering

Intra frame
prediction data

Motion
compensation

Motion
data

Motion
estimation

Decoded
picture buffer

Output video signal

FIG. 1

Inter/intra frame
selection

Motion
compensation

Input
bitstream

Header
information
decoding &
CABAC
decoding

Inverse
quantization,
inverse
transformation

Intra
frame
prediction

In-loop
filtering

Decoded
picture buffer

Output
video
signal

FIG. 2

LMCS
module

DBF
module

SAO
module

ALF
module

FIG. 3

FIG. 4

FIG. 5

ALF_in

The encoding end calculates a new APS for luma ALF and a new APS for chroma ALF for a current slice

The encoding end determines whether a luma ALF decision is enabled

No

Yes

The encoding end performs the luma ALF decision

If a new APS of luma ALF is used

Yes → alf_luma_filter_signal_flag=1

No → alf_luma_filter_signal_flag=0

The encoding end performs the chroma ALF decision

If a new APS of chroma ALF is used

Yes → alf_chroma_filter_signal_flag=1

No → alf_chroma_filter_signal_flag=0

The encoding end reconstructs a picture after the luma ALF and chroma ALF are performed according to the decision results of the luma ALF and the chroma ALF

The encoding end calculates a new APS for CCALF Cb and a new APS for CCALF Cr for the current slice

Yes → alf_cc_cb_filter_signal_flag=1

The encoding end performs the CCALF Cb decision

If a new APS of CCALF Cb is used

No → alf_cc_cb_filter_signal_flag=0

Yes → alf_cc_cr_filter_signal_flag=1

The encoding end performs the CCALF Cr decision

If a new APS of CCALF Cr is used

No → alf_cc_cr_filter_signal_flag=0

The encoding end reconstructs the picture after the CCALF is performed according to the decision results of the CCALF Cb and the CCALF Cr

The encoding end determines whether at least one of identifiers of a plurality of filtering modes is 1

Yes

The encoding end transmits a current new APS

ALF_out

FIG. 6

701          702

| Management apparatus | Harvesting device |

**FIG. 7**

| A management apparatus acquires a target video category and/or a target video feature corresponding to a target video block | S801 |

| The management apparatus determines a correction factor for each decision factor on the basis of the target video category and/or the target video feature | S802 |

| The management apparatus corrects each decision factor on the basis of the correction factor for each decision factor, so as to obtain a plurality of corrected decision factors | S803 |

| The management apparatus stores at least one obtained new APS in a historical candidate set on the basis of each corrected decision factor | S804 |

**FIG. 8**

|  | APS |
|---|---|
| Luma APS | ✕ |
| Chroma APS | ✓ |
| CCALF Cb APS | ✕ |
| CCALF Cr APS | ✕ |

**FIG. 9**

|  | APS |
|---|---|
| Luma APS | ✓ |
| Chroma APS | ✓ |
| CCALF Cb APS | ✓ |
| CCALF Cr APS | ✓ |

FIG. 10

$$APS_7^{ALF} \quad \begin{array}{|c|} S_i^{LumaALF} \\ \hline S_i^{ChromaALF} \\ \hline S_i^{CCALF\ Cb} \\ \hline S_i^{CCALF\ Cr} \end{array} \quad APS_6^{ALF} \quad \begin{array}{|c|} S_i^{LumaALF} \\ \hline S_i^{ChromaALF} \\ \hline S_i^{CCALF\ Cb} \\ \hline S_i^{CCALF\ Cr} \end{array} \quad \cdots \quad APS_0^{ALF} \quad \begin{array}{|c|} S_i^{LumaALF} \\ \hline S_i^{ChromaALF} \\ \hline S_i^{CCALF\ Cb} \\ \hline S_i^{CCALF\ Cr} \end{array}$$

$$APS_i^{ALF}$$

FIG. 11

ALF_in

The management apparatus calculate new APSs ALF of luma ALF and chroma ALF

The management apparatus determines whether an λ correction condition for the luma ALF is met

Yes

The management apparatus determines a correction parameter k based on the video class

alf_luma_filter_signal_flag=1

The management apparatus adjusts λ of the luma ALF by using k

Yes

If a new APS of luma ALF is used

The management apparatus performs a luma ALF decision

No

alf_luma_filter_signal_flag=0

The management apparatus determines whether the luma ALF decision is enabled

Yes

The management apparatus determines whether an λ correction condition for the chroma ALF is met

Yes

The management apparatus determines a correction parameter k based on the video class

alf_chroma_filter_signal_flag=1

The management apparatus adjusts λ of the chroma ALF by using k

Yes

If a new APS of chroma ALF is used

The management apparatus performs a chroma ALF decision

No

alf_chroma_filter_signal_flag=0

The management apparatus performs reconstruction according to the luma ALF and the chroma ALF

A--A

SEE DETAIL B--B

FIG. 12A

CONTINUED FROM DETAIL A--A

B—B

The management apparatus calculates new APSs of
CCALF Cb and CCALF Cr

The management apparatus
determines whether an λ correction condition for the
CCALF Cb is met

Yes

The management apparatus determines a correction
parameter k based on the video class

alf_cc_cb_filter_signal_flag=1

The management apparatus adjusts λ of the CCALF Cb
by using k

Yes

The management apparatus
performs a CCALF Cb decision

If a new APS of CCALF
Cb is used

No

alf_cc_cb_filter_signal_flag=0

The management apparatus
determines whether an λ correction condition for
the CCALF Cr is met

Yes

The management apparatus determines a correction
parameter k based on the video class

alf_cc_cr_filter_signal_flag=1

The management apparatus adjusts λ of the CCALF Cr
by using k

Yes

The management apparatus performs
a CCALF Cr decision

If a new APS of CCALF
Cr is used

No

The management apparatus performs reconstruction
according to the CCALF Cb and the CCALF Cr

alf_cc_cr_filter_signal_flag=0

The management apparatus
determines whether at least one of identifiers of the plurality of
filtering modes is 1

Yes

The management transmits a current APS

ALF_out

FIG. 12B

ALF_in

The management apparatus calculate new APSs ALF of luma ALF and chroma ALF

The management apparatus determines whether an λ correction condition for the luma ALF is met

Yes

The management apparatus determines a correction parameter k based on the video feature

alf_luma_filter_signal_flag=1

The management apparatus adjusts λ of the luma ALF by using k

Yes

If a new APS of luma ALF is used

The management apparatus performs a luma ALF decision

No

alf_luma_filter_signal_flag=0

The management apparatus determines whether the luma ALF decision is enabled

Yes

The management apparatus determines whether an λ correction condition for the chroma ALF is met

Yes

The management apparatus determines a correction parameter k based on the video feature

alf_chroma_filter_signal_flag=1

The management apparatus adjusts λ of the chroma ALF by using k

Yes

If a new APS of chroma ALF is used

The management apparatus performs a chroma ALF decision

No

alf_chroma_filter_signal_flag=0

The management apparatus performs reconstruction according to the luma ALF and the chroma ALF

C—C

SEE DETAIL D--D

FIG. 13A

CONTINUED FROM DETAIL C--C

D─D

The management apparatus calculates new APSs of CCALF Cb and CCALF Cr

The management apparatus determines whether an λ correction condition for the CCALF Cb is met

Yes

The management apparatus determines a correction parameter k based on the video feature

alf_cc_cb_filter_signal_flag=1

The management apparatus adjusts λ of the CCALF Cb by using k

Yes

The management apparatus performs a CCALF Cb decision

If a new APS of CCALF Cb is used

No

alf_cc_cb_filter_signal_flag=0

The management apparatus determines whether an λ correction condition for the CCALF Cr is met

Yes

The management apparatus determines a correction parameter k based on the video feature

alf_cc_cr_filter_signal_flag=1

The management apparatus adjusts λ of the CCALF Cr by using k

Yes

The management apparatus performs a CCALF Cr decision

If a new APS of CCALF Cr is used

No

The management apparatus performs reconstruction according to the CCALF Cb and the CCALF Cr

alf_cc_cr_filter_signal_flag=0

The management apparatus determines whether at least one of identifiers of the plurality of filtering modes is 1

Yes

The management transmits a current APS

ALF_out

FIG. 13B

**EP 4 738 819 A1**

FIG. 14

FIG. 15

**EP 4 738 819 A1**

# INTERNATIONAL SEARCH REPORT

| | International application No. |
|---|---|
| | **PCT/CN2024/131993** |

| A. | CLASSIFICATION OF SUBJECT MATTER |
|---|---|
| | H04N19/117(2014.01)i |

According to International Patent Classification (IPC) or to both national classification and IPC

| B. | FIELDS SEARCHED |
|---|---|

Minimum documentation searched (classification system followed by classification symbols)

IPC:H04N19/-

Documentation searched other than minimum documentation to the extent that such documents are included in the fields searched

Electronic data base consulted during the international search (name of data base and, where practicable, search terms used)

CNABS, CNTXT, ENTXTC, VEN, ENTXT, USTXT, JPTXT, JVET, IEEE, CNKI: 自适应环路滤波, 自适应参数集, 决策因子, 拉格朗日, 类别, 类型, 亮度, 率失真, 色度, 视频, 特征, 图像, 新APS, ALF, APS, CCALF, luma, chroma, lagrange, multiplier, parameter, set, video, feature, RDO, adaptive loop filter, rate distortion optimization

| C. | DOCUMENTS CONSIDERED TO BE RELEVANT |
|---|---|

| Category* | Citation of document, with indication, where appropriate, of the relevant passages | Relevant to claim No. |
|---|---|---|
| A | ZOU, Wenjie et al. "AhG10: Lagrange Multiplier Optimization for Chroma ALF and CCALF." *Joint Video Experts Team (JVET) of ITU-T SG 16 WP 3 and ISO/IEC JTC 1/SC 29 30th Meeting*, 28 April 2023 (2023-04-28), text, sections 1-3 | 1-10 |
| A | CN 116433783 A (ZTE CORP.) 14 July 2023 (2023-07-14) entire document | 1-10 |
| A | US 2023104806 A1 (HANGZHOU HIKVISION DIGITAL TECHNOLOGY CO., LTD.) 06 April 2023 (2023-04-06) entire document | 1-10 |
| A | WO 2022073811 A1 (INTERDIGITAL VC HOLDINGS FRANCE, SAS) 14 April 2022 (2022-04-14) entire document | 1-10 |

☐ Further documents are listed in the continuation of Box C.  ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **10 January 2025** | **14 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/131993**

| Patent document cited in search report | | | Publication date (day/month/year) | Patent family member(s) | | | Publication date (day/month/year) |
|---|---|---|---|---|---|---|---|
| CN | 116433783 | A | 14 July 2023 | WO | 2023124673 | A1 | 06 July 2023 |
| | | | | KR | 20240063933 | A | 10 May 2024 |
| | | | | JP | 2024521525 | W | 31 May 2024 |
| | | | | EP | 4411646 | A1 | 07 August 2024 |
| | | | | US | 2024283951 | A1 | 22 August 2024 |
| US | 2023104806 | A1 | 06 April 2023 | US | 11962768 | B2 | 16 April 2024 |
| | | | | WO | 2021143177 | A1 | 22 July 2021 |
| WO | 2022073811 | A1 | 14 April 2022 | JP | 2023544711 | A | 25 October 2023 |
| | | | | MX | 2023004120 | A | 11 August 2023 |
| | | | | EP | 4226610 | A1 | 16 August 2023 |
| | | | | US | 2023379482 | A1 | 23 November 2023 |
| | | | | CN | 116438795 | A | 14 July 2023 |
| | | | | IN | 202317023303 | A | 24 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410047381